# EUROPEAN PATENT APPLICATION

(11) **EP 1 447 683 A1**
(43) Date of publication of application: **18.08.2004**
(21) Application number: 04075310.5
(22) Date of filing: 02.02.2004
(51) Int. Cl.: G01T 1/29

(54) **Dielectric mirror for better efficiency and light flare control in computer radiographie**

(30) Priority: 13.02.2003 US 366148
(71) Applicant: EASTMAN KODAK COMPANY, Rochester, New York 14650 (US)
(72) Inventor: Boutet, John C, c/o Eastman Kodak Company, Rochester, New York 14650-2201 (US); Hrycin, Anna L, c/o Eastman Kodak Company, Rochester, New York 14650-2201 (US)
(74) Representative: Haile, Helen Cynthia

(57) **Abstract**

In computed radiography apparatus in which a storage phosphor (4) storing a latent image is scanned with stimulating light (6) of a first wavelength range and emits light representative of the stored image of a second wavelength range shorter than the first wavelength range, a light reflecting mirror comprising: a substrate; and a dielectric layer on at least one side of the substrate, the dielectric layer, having a first characteristic, wherein the stimulating light of the second wavelength range is not substantially reflected, and having a second characteristic wherein emitted light of the first wavelength range is reflected over an angle of incidence of about 0° to about 80°.

## Description

This invention relates in general to an apparatus for reading out the image stored in a photostimulable phosphor image recording medium. More particularly, this invention relates to apparatus for collecting and detecting the radiation emitted from the photostimulable phosphor in response to interrogation by stimulating radiation wherein flare is minimized.

In standard medical x-rays a sheet of film is placed in contact with one or two phosphor sheets. The x-rays cause the phosphor to fluoresce, thereby exposing the film. With this method it is critical to insure appropriate exposure for the desired film density.

For wider exposure latitude, computed radiography (CR) utilizes a storage phosphor material, as described in U. S. Patent No. Re. 31,847, reissued Mar. 12, 1985 to Luckey. Part of the absorbed x-ray energy in a storage phosphor causes instantaneous fluorescence, but a significant part is stored in the phosphor and is not emitted as light until this type of media is discharged. The media is discharged by scanning with a relatively long wavelength beam of stimulating radiation, such as red or infrared light. The red stimulating light excites the phosphor causing the release of stored energy as short wavelength blue or violet emitted light. The amount of short wavelength emitted light from each pixel area of the phosphor surface is measured and represents the quantity of x-ray exposure, if the red stimulating energy is constant and illuminating only the pixel being read. Most of the red stimulating light diffusely reflects off the phosphor surface and must be prevented from reimpinging elsewhere on the phosphor where it could discharge energy as blue "flare" light from areas other than the pixel being read.

To optimize the signal-to-noise ratio of the imaging system, it is desirable to collect as much of the emitted light as possible and to direct it to the photodetector. John C. Boutet disclosed a Split V-roof mirror collector having improved collection efficiency in U.S. Patent No. 5,105,079, issued April 14, 1992. John C. Boutet and Michael B. Brandt went on to disclose in U.S. Pat. No. 5,151,592 issued September 29, 1992, the possible use of second-surface reflector-coated blue filters or other means to produce blue mirrors that reflect blue and do not reflect red light to control flare in CR light collectors. One problem they mention about such blue mirrors is that they generally have some blue absorption that reduces blue light collection efficiency.

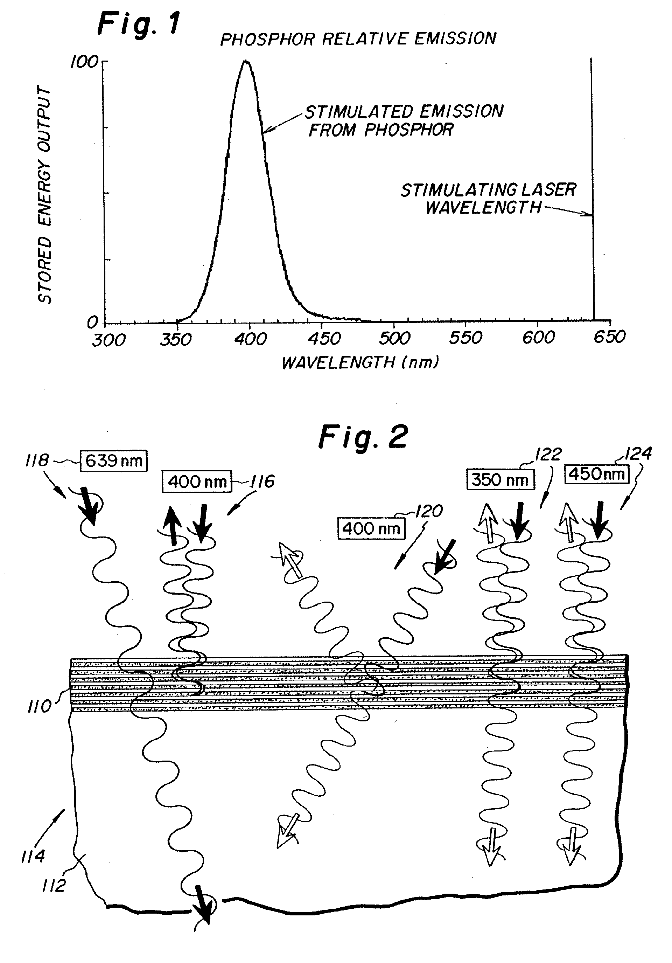

For achieving high collection efficiency the mirror reflectivity should be as close to 100% as possible. Figure 1 shows that the emission spectra of the blue stored energy wavelengths from a typical storage phosphor have a 350 nm to 450 nm distribution peaking at 400 nm and the stimulating radiation is typically a narrow laser output which in this case is at 639 nm.

Uncoated aluminum generally provides around 90% reflectivity in the blue emission range and has similar reflectivity in the red region. By enhancing the aluminum coating with 4 to 6 coating layers the average reflectivity can be enhanced to 95% or higher, and more layers will increase it even higher. Blue filter mirrors produced by aluminizing the back face of a blue filter can yield high reflectivity but one must contend with the absorption of the glass. Collector designs have generally controlled flare by optimizing collector geometry for low flare and high efficiency. This has restricted the design space one can explore for high efficiency.

The uses of multilayer coatings 110 on a substrate 112 such as glass to produce mirrors that reflect one wavelength and pass another is well known and is shown in Figure 2. As shown, multilayer mirror 114 has coating 110 which is tuned to reflect 400 nm blue light at near normal incidence as shown in ray 116. Such a coating can pass a majority of red light of 639 nm at many angles (ray 118) and will significantly reduce flare. Such a simple single quarter wave stack mirror will not work for CR light collector, since the coatings must work for a reflectance wavelength range of at least 100 nm and a reflectance angle of incidence range of near 0 degrees to near 90 degrees from normal. Thus, 400 nm ray 120 incident at an acute angle and 350 nm ray 122 and 450 nm ray 124 will be only partially reflected thus resulting in reduced reflective efficiency. There is thus a need for a mirror design which can get high reflectance over both the wavelength range and the huge incidence angular range being utilized in a CR collector.

According to the present invention, there is provided a solution to the problems of the prior art.

According to a feature of the present invention, there is provided in computed radiography apparatus in which a storage phosphor storing a latent image is scanned with stimulating light of a first wavelength range and emits light representative of said stored image of a second wavelength range shorter than said first wavelength range, a light reflecting mirror comprising:
a substrate; and
a dielectric layer on at least one side of said substrate, said dielectric layer, having a first characteristic, wherein said stimulating light of said second wavelength range is not substantially reflected, and having a second characteristic that emitted light of said first wavelength range is reflected over an angle of incidence of about 0° to about 80°.

The invention has the following advantages.
1. Using dielectric mirrors that have outstanding blue light reflection but relatively poor red light reflection for CR collector design, provides a geometry independent flare control mechanism.
2. This technique permits optimizing the collector geometry to maximize collection efficiency without compromising efficiency for flare control.

Fig. 1 is a graphical view of stored energy output versus wavelength for a storage phosphor.

Fig. 2 is a diagrammatic view illustrating the reflectance characteristics of a multilayer mirror tuned to reflect 400 nm blue light.

Fig. 3 is a diagrammatic view of an embodiment of the present invention.

Fig. 4 is a graphical view of reflection versus wavelength for the embodiment of Fig. 3.

Figs. 5A to 5D are diagrammatic views of exemplary CR collector apparatus incorporating the present invention.

According to the invention dielectric mirrors are used for flare control in a CR light collector which permits optimizing the collector geometry to maximize collection efficiency without compromising the design for flare control. To produce a reflector with the needed properties, there is provided a multilayer filter / mirror on a clear glass substrate with the dielectric coatings designed to be highly reflective from 350 nm to 450 nm, the wavelengths emitted from the CR phosphor, while having relatively poor reflectivity to the red stimulating laser wavelength of 639 nm. The coating is tuned to maintain high reflectivity for the wavelength range of blue emissions over the wide range of reflection angles (from 0 to over 80 degrees) encountered in CR collectors. Enough layers must be used to cover both the blue wavelength region and the large shift in reflectivity vs. wavelength associated with the huge range of angles utilized. Lower reflectance is required in the red light region (in this case at 639 nm) over most of the same angular range.

Typically, less than 20% red reflectance over the 20 - 60 degree range will provide good flare attenuation since flare rays undergo several reflections at a variety of angles before getting back to the phosphor.

Materials such as Ta₂O₅ (Tantalum Oxide), SiO₂ (Silicon Dioxide), MgF₂ (Magnesium Flouride), HfO₂ (Hafnium Oxide), ( and/or multicomponent materials) can be used, but the invention is not limited to using only these materials. Thin metal layers may also be incorporated into this type of reflector design.

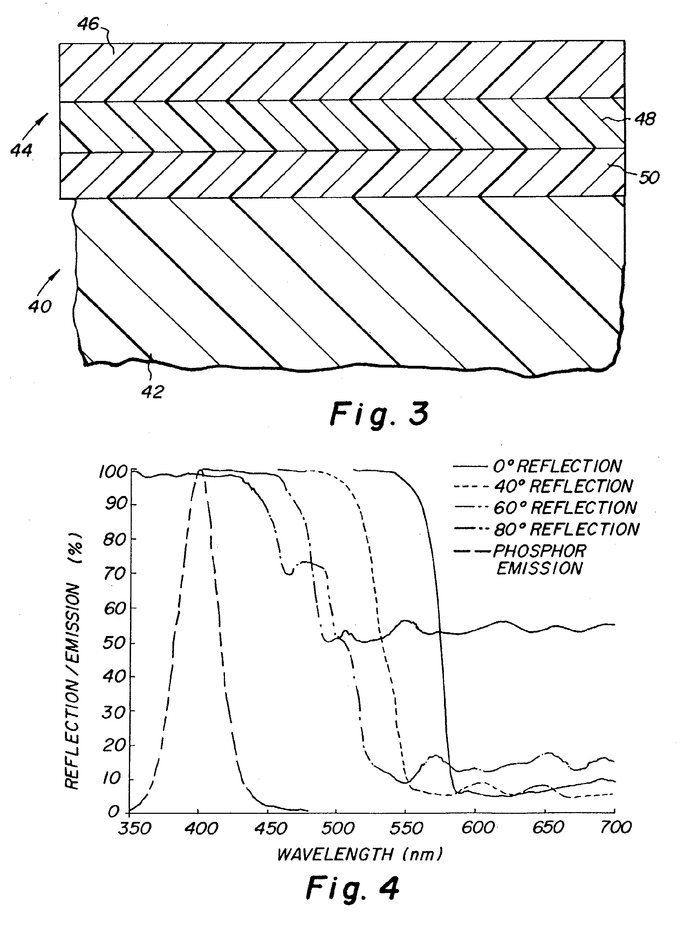

An embodiment of the invention includes a modified three-quarterwave stack design using Ta₂O₅ and SiO₂ and is shown in Fig. 3.

As shown, mirror 40 includes substrate 42 and dielectric mirror 44 which includes outer layer stack 46, middle layer stack 48 and inner layer stack 50. Layers of stack 46 are thicker than layers of stack 48 which are thicker than layers of stack 50. An exemplary mirror includes layers of SiO₂ (represented as "L") and Ta₂O5 (represented as "7") as follows;
Layer 50 - 11 composite layers of: .095T, .19L, .095T.
Layer 48 - 10 composite layers of .11T, .22L, .11T.
Layer 46 - 10 composite layers of : .125T, .25L, .125T.
where .25L is a QWOT (Quarter Wave Optical Thickness) of SiO₂ at 500 nm and .25T is a QWOT of (Quarter Wave Optical Thickness) Ta₂O₅ at 500 nm.

The dielectric mirrors of the invention have better reflectivity for blue light emission range of 350 to 450 nm than enhanced aluminum mirrors previously used over the wide range of reflection angles encountered in existing CR light collectors. The relatively poor reflection of red light by this multilayer dielectric mirror provides a flare control mechanism that has allowed collector geometries and capabilities which would have previously been impossible where flare had to be limited only through collector geometry selection. The dielectric mirrors of the invention provide flare control advantages of blue filter mirrors as described in U.S. Patent No. 5,151,592 without the blue light absorption penalty the blue filter mirrors have if made out of available blue glass.

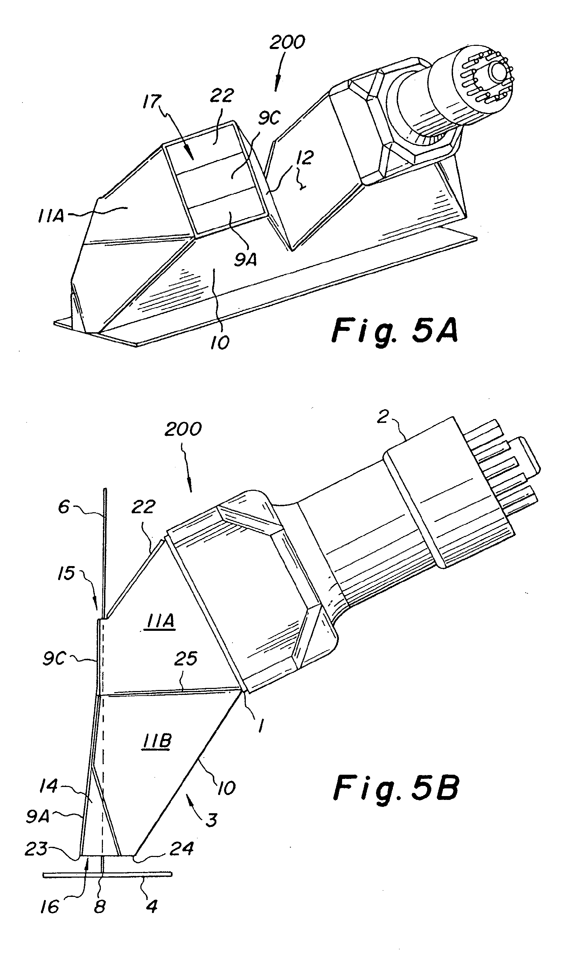

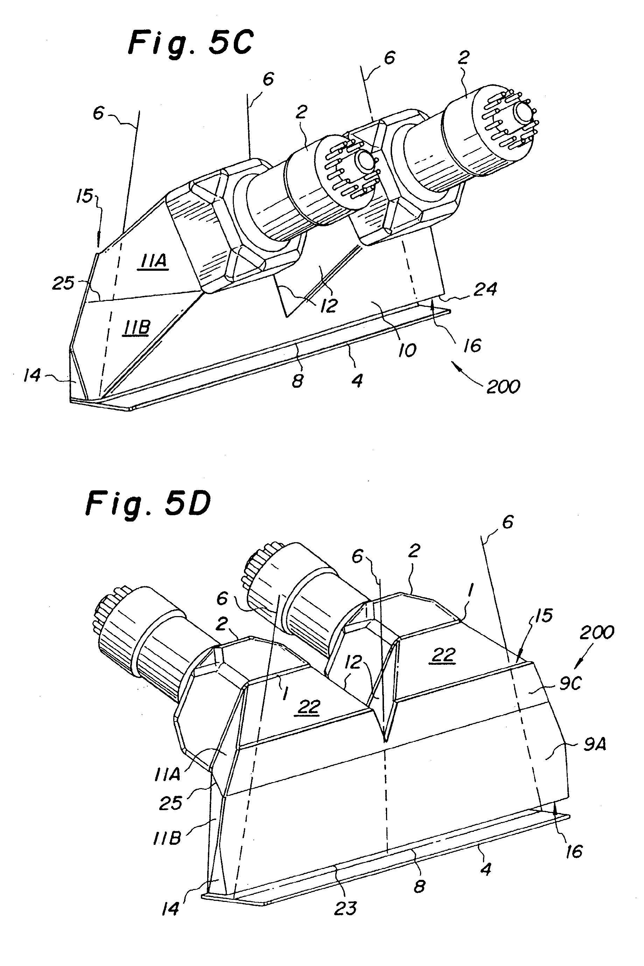

Manufacturing cost of the CR collector can be reduced by using them on only the part of the collector where they have the most impact. In the CR collector shown in Figs. 5A-5D and described below, only half the mirrors needed to be made of dielectric mirrors according to the invention to keep the flair under 1%.

The mirror coating of the invention is relatively transparent to wavelengths outside the blue range. Consequently to control flare in CR applications using dielectric mirrors requires that a mechanism for absorbing the transmitted red light be provided to avoid red light passing back through the dielectric coating with the potential of reaching the scanned phosphor and causing flare. The transmitted red light can be absorbed by coating the dielectric mirror on a red absorbing substrate, and preferably on a black substrate. Alternatively, if coated on a clear substrate, (1) the back of the substrate can be painted black, (2) the clear substrate can be mounted into the collector with red absorbing and preferably black adhesive, and/or (3) the clear substrate can be mounted on a red absorbing and preferably black mounting surface to ensure red light does not pass back through the mirror to reenter the collector cavity. The preferable embodiment for red light absorption is a black substrate or a clear substrate with index matching black coating on the back face. Such a coating can be black paint or black adhesive which completely coats the back of the mirror. These options eliminate the potential for Fresnel reflection of red light back into the collector by an air/glass (or air/plastic) interface at the back surface of the substrate and prevent reflections off the surfaces to which the mirrors are mounted since such surfaces are generally less than 85% absorbing to red light. The mirror substrate, or if the substrate is clear, the materials used to paint or mount the mirrors, or which are otherwise positioned behind the mirrors and illuminated by red light, must not, when so illuminated, fluoresce at a wavelength that can pass through the dielectric mirror and the blue PMT filters to cause fluorescence flare.

These mirrors can be used in conjunction with less expensive broad-spectrum mirrors in the collector, such as 3M ESR film, to minimize cost. Low red reflectance dielectric mirrors can be placed in the most effective positions for minimizing flare in the collector and the lower cost mirrors can be used elsewhere in the collector.

The difficulty of forming glass mirrors by grinding bevels to avoid gaps between adjacent mirrors or mirrors and PMT filters adds to the manufacturing cost of using dielectric mirror coatings on glass. Coating the dielectric on similar thickness plastic (polymeric) substrate makes machining of bevels less expensive and reduces the danger of edge damage if mirror edges touch. Black plastic stock is also readily available.

An embodiment of the invention includes coating the dielectric layers on thin plastic web substrate such as polycarbonate roll stock in the 0.08 mm to 0.25 mm thickness range using continuous web coating technology. Continuous coaters greatly reduces the time required per unit area to load and pump down vacuum coating equipment and greatly reduces the cost of the dielectric mirror stock. The flexible mirror web permits designing collectors with curved mirror surfaces, permitting further design optimization. If all dielectric mirror coatings are applied to one side of the substrate web, the use of a black support would provide for a red light absorption feature.

When coating thin plastic webs on one side, the potential for curl buildup is great. To further reduce mirror cost and eliminate the curl problem, the multilayer dielectric coatings can be split so that part of the mirror coatings is on one side of the web and the remainder of the coatings are on the other side of the web. By using a double-sided web coater, this approach not only eliminates curl problems but also cuts the coating time in half. Since a clear web must be used for double-sided coating, in a preferred embodiment the final pass through the coater would apply a black overcoat to the second surface dielectric coatings to provide red absorption.

The above design is meant as an example of a mirror that would work in this application and in no way would be limited to this design, design type or materials used in this design example. This application covers the use of a thin film filter / mirror that would transmit stimulating wavelengths while reflecting as much of radiation emitted from the photostimulable phosphor as possible over all angles required.

Referring now to Figures 5A to 5D, there is shown an apparatus (200) incorporating an embodiment of the present invention. As shown, a blue filter (1) is cemented on light detector PMT (Photo Multiplier Tube) (2) and two such PMT-filter assemblies are attached to the pyramidal mirror chambers (3) to collect light emitted by phosphor (4) as it is scanned by red laser light beam (6) along scan line (8). The pyramidal mirrors chambers (3) are bounded by normal mirror, bottom (9A), normal mirror, top (9C), bottom mirror (10), two top outer filter mirrors (11A), two top outer side mirrors (11B), two top inner mirrors (12), two end mirrors (14), beam entrance slot (15), bottom collection aperture (16), two PMT filter apertures (17) which admits light to PMT filters (1), and top slot mirrors (22). The laser beam (6) passes through the pyramidal mirror chambers to the phosphor (4) by means of passage provided by top beam entrance slot (15) and the bottom collection aperture (16). The left and right pyramidal chambers are joined in the middle of the collector by a split triangular passage defined by the abutting edges of top inner mirrors (12), normal mirror (9A), and the bottom mirror (10), and split by the beam entrance slot (15), and the collection aperture (16). The beam entrance slot (15) is defined by normal mirror, top (9C) on one side and edges of top slot mirrors (22) and top inner mirrors (12) on the other, with the ends of the slot (15) bounded by the two top outer filter mirrors (11A). The collection aperture (16) is bounded by entrance aperture edge (23) and (24) of normal mirror (9A) on one side and bottom mirror (10) on the opposite side respectively. The ends of the collection aperture (16) are defined by end mirrors (14). The collection aperture (16) lets blue light emitted from the phosphor (4) and red light, from laser light beam (6) reflected from the phosphor (4), enter the pyramidal mirrors chambers (3) which directs the light to the two PMT filter apertures (17).

The reduced cost of thin web dielectric mirrors, which can economically be used throughout the collector, permits optimization of the PMT filter Anti-Reflection (AR) coating for blue only since the dielectric mirrors scavenge reflected red light from the PMT AR coating. With the AR coating blue transmission not compromised to also get good red transmission, a collection efficiency gain for blue light is realized w/o flare boost.

## Claims

1. In computed radiography apparatus in which a storage phosphor storing a latent image is scanned with stimulating light of a first wavelength range and emits light representative of said stored image of a second wavelength range shorter than said first wavelength range, a light reflecting mirror comprising:
a substrate; and
a dielectric layer on at least one side of said substrate, said dielectric layer, having a first characteristic, wherein said stimulating light of said second wavelength range is not substantially reflected, and having a second characteristic wherein emitted light of said first wavelength range is reflected over an angle of incidence of about 0° to about 80°.

2. The mirror of claim 1 wherein said substrate is glass.

3. The mirror of claim 1 wherein said substrate is a rigid polymeric material.

4. The mirror of claim 1 wherein said substrate is a flexible polymeric material.

5. The mirror of claim 1 including a black stimulating light absorbing layer between said dielectric layer and said substrate.

6. The mirror of claim 1 wherein said substrate is of a mirror mounting member and wherein said mirror is mounted to said member with black adhesive or wherein said member is black to absorb said stimulating light.

7. The mirror of claim 1 wherein said dielectric layer includes a first plurality of dielectric layers and a second plurality of dielectric layers thinner than said first plurality of dielectric layers.

8. The mirror of claim 1 wherein said dielectric layer includes first, second, and third plurality of layers which progressively are thinner from said first plurality of dielectric layers to said third plurality of layers.

9. The mirror of claim 1 wherein said first wavelength range is about 350 nm (nanometers) to 450 nm and said second wavelength range is centered on 630 to 640 nm.

10. The mirror of claim 1 wherein said mirror includes a further dielectric layer on said other side of said substrate having said first and second characteristics of said dielectric layer on said at least one side.
